# EUROPÄISCHE PATENTANMELDUNG

(11) **EP 3 355 230 A1**
(43) Veröffentlichungstag der Anmeldung: **01.08.2018**
(21) Anmeldenummer: 17153037.1
(22) Anmeldetag: 25.01.2017
(51) Int. Cl.: G06F 21/64, H04L 9/06

(54) **VERFAHREN UND VORRICHTUNG ZUM RECHNERGESTÜTZTEN ERSTELLEN UND AUSFÜHREN EINER STEUERFUNKTION**

(71) Anmelder: Siemens Aktiengesellschaft, 80333 München (DE)
(72) Erfinder: Falk, Rainer, 85586 Poing (DE)

(57) **Zusammenfassung**

Die Erfindung realisiert Verfahren zum rechnergestützten Erstellen und Ausführen einer Steuerungsfunktion. Die Steuerfunktion kann dabei insbesondere für ein spezifisches technisches System, z. B. ein Automatisierungssystem, realisiert werden und insbesondere durch eine Blockkette kryptographisch geschützt sein. Insbesondere sind somit die erfindungsgemäßen Verfahren für ein spezifisches technisches System, z. B. ein Automatisierungssystem, geeignet.

## Beschreibung

Die Erfindung bezieht sich auf ein Verfahren und eine Vorrichtung zum rechnergestützten Erstellen und Ausführen einer Steuerfunktion.

Die Technologie von Blockketten (engl. Blockchains) bzw. "Distributed Ledgers" ist aktuell ein intensiv diskutierte Technologie. Neben Anwendungen für dezentrale Bezahlsysteme (z. B. Bitcoin) werden in der Finanzindustrie neue Anwendungsmöglichkeiten entwickelt. Insbesondere können Transaktionen zwischen Firmen dadurch ohne Vermittler bzw. Clearing-Stelle manipulationsgeschützt realisiert werden. Dies ermöglicht neue Geschäftsmodelle ohne einen vertrauenswürdigen Vermittler, es reduziert die Transaktionskosten, und es können flexibel neue digitale Dienste angeboten werden, ohne eine dafür speziell eingerichtete Infrastruktur und Vertrauensbeziehungen einrichten zu müssen. Ein durch eine Blockchain geschützter Transaktionsdatensatz (oder kurz Transaktion) umfasst i.A. Programmcode, der auch als sogenannter "Smart Contract" bezeichnet werden kann.

Eine Aufgabe der vorliegenden Erfindung ist es, Verfahren und Vorrichtungen bereitzustellen zum sicherheitsgeschützten Erstellen und Ausführen einer Steuerfunktion.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Gemäß einem ersten Aspekt betrifft die Erfindung ein Verfahren zum rechnergestützten Erstellen einer Steuerfunktion mit folgenden Verfahrensschritten:
- Bereitstellen einer ersten Steuerungsaktion der Steuerfunktion;
- Speichern der ersten Steuerungsaktion in einem ersten Transaktionsdatensatz;
- Erstellen der ersten Steuerfunktion durch ein Erzeugen eines ersten Gliedes einer Blockkette, wobei
   - das erste Glied den ersten Transaktionsdatensatz umfasst,
   - eine Integrität des ersten Gliedes und/oder vorhergehender Glieder des ersten Gliedes der Blockkette mittels einer ersten Prüfsumme geschützt wird.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren.

Unter einer "Prüfsumme" kann im Zusammenhang mit der Erfindung beispielsweise eine kryptographische Prüfsumme oder kryptographischer Hash bzw. Hashwert verstanden werden, die insbesondere mittels einer kryptographischen Hashfunktion über einen Datensatz/Transaktion gebildet oder berechnet wurde. Bei einer Prüfsumme kann es sich insbesondere um eine Prüfsumme/n oder Hashwert/e eines Hash-Baumes handeln. Weiterhin kann darunter insbesondere auch eine digitale Signatur oder ein kryptographischer Nachrichtenauthentisierungscode verstanden werden.

Unter "erster Prüfsumme" kann im Zusammenhang mit der Erfindung eine Prüfsumme verstanden werden, die insbesondere über das erste Glied bzw. der Transaktionen (z. B. des ersten Transaktionsdatensatzes) des ersten Gliedes und/oder vorhergehende Glied/Vorgänger-Glied des ersten Gliedes der Blockkette gebildet wurde. Zusätzlich oder alternativ kann die erste Prüfsumme insbesondere auch über Transaktionen des vorhergehenden Gliedes/Vorgänger-Gliedes (z. B. einen ersten Transaktionsdatensatz des Vorgänger-Gliedes) gebildet worden sein. Die erste Prüfsumme kann dabei insbesondere auch mittels eines Hash-Baumes, beispielsweise einem Merkle Baum, realisiert werden, wobei die erste Prüfsumme insbesondere die Wurzel-Prüfsumme des Merkle-Baumes ist. Insbesondere werden Transaktionsdatensätze und/oder Transaktionen mittels weiteren Prüfsummen aus dem Merkle-Baum abgesichert, wobei insbesondere die weiteren Prüfsummen Blätter im Merkle-Baum sind. Die erste Prüfsumme kann damit beispielsweise die Transaktionen absichern, indem die Wurzel-Prüfsumme aus den weiteren Prüfsummen gebildet wird. Die erste Prüfsumme kann insbesondere auch in einem dem ersten Glied nachfolgende Glied eingehen, um dieses nachfolgend Glied beispielsweise mit ihren vorhergehenden Gliedern (z. B. das erste Glied) zu verknüpfen und insbesondere damit eine Integrität der Blockkette prüfbar zu machen.

Unter "Bereitstellen" kann im Zusammenhang mit der Erfindung beispielsweise ein Laden oder ein Speichern, beispielsweise des ersten Transaktionsdatensatzes und/oder der Steuerungsaktions-Transaktion und/oder Zustands-Assertion-Transaktion, auf oder von einem Speichermodul verstanden werden.

Unter "Proof-of-Work-Nachweis" kann im Zusammenhang mit der Erfindung beispielsweise ein Lösen einer rechenintensiven Aufgabe verstanden werden, die insbesondere abhängig vom Glied-Inhalt/Inhalt eines ersten Transaktionsdatensatzes zu lösen ist. Eine solche rechenintensive Aufgabe wird beispielsweise auch als kryptographisches Puzzle bezeichnet.

Unter "Glied" kann im Zusammenhang mit der Erfindung beispielsweise ein Block einer Blockkette verstanden werden, die insbesondere als Datenstruktur realisiert ist.

Unter "vorhergehender Glieder des ersten Gliedes der Blockkette" kann im Zusammenhang mit der Erfindung beispielsweise nur das Glied der Blockkette verstanden werden, das insbesondere dem ersten Glied direkt vorhergeht. Alternativ können unter "vorhergehender Glieder des ersten Gliedes der Blockkette" insbesondere auch alle Glieder der Blockkette verstanden werden, die dem ersten Glied vorhergehen. Hierdurch kann beispielsweise die erste Prüfsumme insbesondere nur über das dem ersten Glied direkt vorhergehende Glied oder über alle dem ersten Glied vorhergehenden Glieder gebildet werden.

Unter einem "Transaktionsdatensatz" können im Zusammenhang mit der Erfindung beispielsweise die Daten einer Transaktion eines Gliedes einer Bockkette (engl. Blockchain) oder mehrere Transaktionen eines Gliedes einer Bockkette verstanden werden. Ein Transaktionsdatensatz kann beispielsweise eine Transaktion umfassen, die beispielsweise einen Programmcode umfasst, der insbesondere einen Smart Contract realisiert. Unter einem "Transaktionsdatensatz" können im Zusammenhang mit der Erfindung beispielsweise auch eine Transkation (z. B. die Steuerfunktion oder die erste Steuerungsaktion) eines Gliedes einer Blockkette und/oder eine Steuerungsaktions-Transaktion und/oder eine Zustands-Assertion-Transaktion und/oder eine Kombination aus den genannten Transaktionen verstanden werden.

Unter einer "Steuerfunktion" können im Zusammenhang mit der Erfindung beispielsweise eine oder mehrere Steuerungsaktionen insbesondere für ein Automatisierungssystem verstanden werden.

Unter einer "Steuerungsaktion" können im Zusammenhang mit der Erfindung beispielsweise Steuerungsbefehle, Programmbefehle, Programmcode oder Steuerungsanweisungen, insbesondere für ein Automatisierungssystem, verstanden werden. Mittels einer Steuerungsaktion kann beispielsweise ein Aktor eines Fertigungsroboters oder ein Aktor eines Stromkopplers eines Energieverteilungsnetzes gesteuert werden.

Unter einem "Programmcode" können im Zusammenhang mit der Erfindung beispielsweise Steuerungsbefehle, Programmbefehle, oder Steuerungsanweisungen verstanden werden, die insbesondere in einer Transaktion gespeichert sind.

Unter einem "Smart Contract" kann im Zusammenhang mit der Erfindung beispielsweise ein ausführbarer Programmcode verstanden werden.

Unter einer "Steuerungsaktions-Transaktion" (engl. Control Action Transaction, CAT) oder "Zustands-Assertion-Transaktion" (engl. State Assertion Transaction, SAT) kann im Zusammenhang mit der Erfindung beispielsweise eine Transaktion eines Gliedes einer Blockkette verstanden werden. Eine solche Transaktion kann beispielsweise einen Programmcode umfassen, der insbesondere einen Smart Contract realisiert. Eine Steuerungsaktions-Transaktion kann beispielsweise berechenbare Anforderungen definieren, die insbesondere mittels eines Proof-of-Work-Nachweises realisiert werden können. Insbesondere erst wenn die Steuerungsaktions-Transaktion erfolgreich ausgeführt oder bestätigt wurde, kann beispielsweise die Steuerungsaktion und/oder Steuerfunktion ausgeführt werden. Eine Zustands-Assertion-Transaktion kann beispielsweise messbare physikalische Werte in Form von ersten Sensorwerten umfassen, die insbesondere mittels eines Sensors erfasst werden können. Bei den Sensorwerten kann es sich beispielsweise um Sensorrohdaten oder um vorverarbeitete Sensorrohdaten handeln. Insbesondere werden erst vor einem Ausführen der Steuerungsaktion und/oder Steuerfunktion nochmals entsprechende zweite Sensorwerte der gleichen physikalischen Größe erfasst. Die Steuerungsaktion und/oder Steuerfunktion wird insbesondere nur dann ausgeführt, wenn der zweite Sensorwert mit dem ersten Sensorwert übereinstimmt. Zum Feststellen dieser Übereinstimmung können insbesondere Schwellwerte vorgegeben werden, die insbesondere der zweite Sensorwert erreichen soll. Hierbei können insbesondere auch Abweichungen/Fehler bis zu einer vorgegebenen Größe/Toleranzbereich akzeptiert werden.

Unter einem "Pfad einer Blockkette" kann im Zusammenhang mit der Erfindung beispielsweise eine Position eines Gliedes in einer Blockkette relativ zu anderen Gliedern der Blockkette verstanden werden. Beispielsweise kann eine Blockkette Abzweigungen (z. B. gewollte oder ungewollte Abzweigungen) enthalten, sodass es insbesondere neben vorhergehender Glieder und nachfolgender Glieder auch parallele Glieder in einem Seitenpfad der Blockkette gibt, der insbesondere durch eine Abzweigung erzeugt wurde.

Unter einem "Blockketten-Knoten", "Knoten", "Knoten einer Blockkette" und dergleichen, können im Zusammenhang mit der Erfindung beispielsweise Geräte (z. B. Feldgeräte), Rechner oder Teilnehmer verstanden werden, die Operationen mit einer Blockkette durchführen. Solche Knoten können beispielsweise Transaktionen einer Blockkette bzw. deren Glieder ausführen oder neue Glieder mit neuen Transaktionen in die Blockkette einführen.

Das Verfahren ist dahingehend vorteilhaft, da es insbesondere eine blockketten-basierte Überprüfung von Transaktionen, beispielsweise die Steuerungsaktion bzw. Steuerfunktion, ermöglicht. Somit kann beispielsweise eine gesicherte cloudbasierte oder gesicherte verteilte Steuerungs- oder Überwachungsfunktion eines (spezifischen) technischen Systems realisiert werden. Insbesondere ist eine verlässliche, manipulationsgeschützte Steuerungsfunktion realisierbar, die vorzugsweise nicht von speziellen Hardware- oder Netzwerkarchitekturen abhängt. Dadurch können insbesondere verteilte Steuerungssysteme ohne zentrale Steuerrechner realisiert werden. Diese ist beispielsweise auch durch die impliziten kryptographischen Mechanismen einer Blockkette (engl. Blockchain) gegenüber absichtlichen Manipulationen geschützt. Dadurch wird insbesondere ein hoher Integritätsschutz der Steuerungsfunktionalität gewährleistet. Insbesondere kann eine manipulationsgeschützte Sicherheits-Schutzfunktion (engl. safety protection function) realisiert werden, bei der insbesondere redundante Berechnungen und Überprüfungen erfolgen (z. B. Proof-of-Work-Nachweis). Es ist insbesondere auch denkbar, dass beispielsweise eine zugangskontrollierte Blockketten-Realisierung ohne einen Proof-of-Work-Nachweis verwendet wird. Auch hier erfolgen insbesondere Überprüfungen, die beispielsweise die Zulässigkeit einer Transaktion abhängig von einem Smart Contract einer zurückliegenden Transaktion verifizieren.

Bei einer ersten Ausführungsform des Verfahrens wird zusätzlich eine Steuerungsaktions-Transaktion in dem ersten Transaktionsdatensatz gespeichert.

Das Verfahren ist beispielsweise dahingehend vorteilhaft, um insbesondere durch die Steuerungsaktions-Transaktion eine manipulationsgeschützte Protokollierung (z. B. Black Box Recorder, Juridical Recorder), insbesondere der Automatisierungsanlage, zu realisieren. Hierdurch kann insbesondere auf zusätzliche Überwachungshardware verzichtet werden.

Insbesondere wird durch die Steuerungsaktions-Transaktion ein zusätzlicher Sicherheitsmechanismus eingeführt, da beispielsweise die Steuerfunktion und/oder die Steuerungsaktion nur ausgeführt wird, wenn die Steuerungsaktions-Transaktion bestätigt und/oder erfolgreich ausgeführt wurde.

Bei einer weiteren Ausführungsform des Verfahrens wird durch die Steuerungsaktions-Transaktion eine sicherheitskritische Schutzfunktion für die Steuerfunktion und/oder die erste Steuerungsaktion vorgegeben. Hier wird beispielsweise unter sicherheitskritische Schutzfunktion eine Funktion bezüglich der funktionalen Sicherheit (Safety) verstanden. Dies ist insbesondere dahingehend vorteilhaft, dass beispielsweise eine sicherheitskritische Schutzfunktion verlässlich und manipulationsgeschützt mittels einer Blockkette realisiert werden kann. Dadurch kann insbesondere auf speziell für funktionale Sicherheit ausgelegte Hardware-Rechner-Realisierungen wie z.B. mehrkanalige Rechner verzichtet werden oder sie können zumindest weniger aufwendig ausgelegt werden. Es ist also insbesondere möglich, dass beispielsweise eine Blockketten-Funktionalität durch einen mehrkanaligen bzw. redundanten (z.B. zwei-aus-drei-Rechnerarchitektur) Rechenknoten/Knoten realisiert ist. Dabei können insbesondere in einer Variante z. B. nur mehrkanalige Rechner verwendet werden. In einer anderen Variante werden beispielsweise sowohl mehrkanalige wie auch einfache einkanalige Rechner verwendet, die gemeinsam die Blockkette realisieren.

Das Verfahren ist beispielsweise dahingehend vorteilhaft um Sicherheitsanforderungen zu definieren, die insbesondere vor einem Ausführen der Steuerfunktion und/oder der Steuerungsaktion bestätigt und/oder erfolgreich ausgeführt werden müssen. Dies kann beispielsweise dadurch realisiert werden, indem die Steuerungsaktions-Transaktion einen bestimmten Proof-of-Work-Nachweis fordert bzw. vorgibt.

Bei einer weiteren Ausführungsform des Verfahrens wird durch die Steuerungsaktions-Transaktion ein Pfad für den ersten Transaktionsdatensatz der Blockkette vorgegeben.

Das Verfahren ist beispielsweise dahingehend vorteilhaft, um zu erreichen, dass die Blockkette bestimmte Anforderungen erfüllt. So kann zum Beispiel gefordert werden, dass die Blockkette aus einer vorgegebenen Anzahl von Gliedern besteht, für die Blockkette keine Abzweigungen existieren oder nur eine bestimmte Anzahl von Abzweigungen von der Blockkette erlaubt sind. Hierdurch kann insbesondere ein Ausführen der Steuerfunktion und/oder der Steuerungsaktion bei einer möglichen Manipulation der Blockkette durch unerlaubte Abzweigungen in der Blockkette unterbunden werden. Auch kann beispielsweise gefordert werden, dass die Blockkette abzweigungsfrei ist und es somit insbesondere keine Seitenpfade gibt.

Bei einer weiteren Ausführungsform des Verfahrens wird durch die Steuerungsaktions-Transaktion eine erste Anzahl vorhergehender Glieder des ersten Gliedes und/oder eine zweite Anzahl von nachfolgenden Glieder des ersten Gliedes vorgegeben, wobei durch die Steuerungsaktions-Transaktion vorgegeben wird, dass eine Integrität der ersten Anzahl der vorhergehenden Glieder und/oder der zweiten Anzahl der nachfolgenden Glieder bestätigt wird.

Das Verfahren ist beispielsweise dahingehend vorteilhaft, um eine hohe Sicherheit zu erreichen, indem insbesondere die Integrität mehrerer Glieder bestätigt werden muss, bevor ein Ausführen der Steuerfunktion und/oder der Steuerungsaktion erlaubt wird.

Bei einer weiteren Ausführungsform des Verfahrens wird zusätzlich ein erster Sensorwert und/oder weitere Sensorwerte für eine Zustands-Assertion-Transaktion in dem ersten Transaktionsdatensatz gespeichert.

Das Verfahren ist beispielsweise dahingehend vorteilhaft, um eine hohe Sicherheit zu erreichen, indem insbesondere messbare physikalische Größen berücksichtigt werden. Bei den physikalischen Größen kann es sich beispielsweise um Messwerte eines spezifischen technischen Systems (z. B. ein Automatisierungssystem) handeln, wie z. B. eine Betriebstemperatur, ein Spannungsniveau einer elektrischen Leitung, ein Druck, eine Kraft usw. Insbesondere bevor ein Ausführen der Steuerfunktion und/oder der Steuerungsaktion erlaubt wird, müssen beispielsweise diese Größen erneut oder unabhängig gemessen (z. B. als zweiter Sensorwert oder als Sensorwert eines zweiten Sensors) werden und bei einem Vergleich mit dem ersten Sensorwert mit diesem vorzugsweise übereinstimmen, wobei insbesondere Messungenauigkeiten und/oder Abweichungen bis zu einem vorgegeben Toleranzwert akzeptiert werden. Diese Steuerungslogik kann insbesndere dabei als Smart Contract einer Blockkette oder als Smart Contract einer Transkation einer Blockkette realisiert sein.

Bei einer weiteren Ausführungsform des Verfahrens wird durch die Steuerungsaktions-Transaktion eine dritte Anzahl von Blockketten-Knoten vorgegeben, welche ihre zugehörige Steuerungsaktions-Transaktion und/oder Zustands-Assertion-Transaktion erfolgreich ausführen und/oder bestätigen.

Das Verfahren ist beispielsweise dahingehend vorteilhaft, um eine hohe Sicherheit zu erreichen, indem insbesondere die Integrität mehrerer Glieder bestätigt werden muss, bevor ein Ausführen der Steuerfunktion und/oder der Steuerungsaktion erlaubt wird.

Gemäß einem weiteren Aspekt betrifft die Erfindung ein Verfahren zum rechnergestützten Ausführen einer Steuerfunktion mit folgenden Verfahrensschritten:
- Bereitstellen eines ersten Gliedes einer Blockkette, wobei das erste Glied einen ersten Transaktionsdatensatz und eine erste Prüfsumme umfasst;
- Prüfen einer Integrität des ersten Gliedes und/oder vorhergehender Glieder des ersten Gliedes der Blockkette mittels der ersten Prüfsumme, wobei wenn die Integrität erfolgreich festgestellt wird, zusätzlich folgende Verfahrensschritte ausgeführt werden:
- Laden einer ersten Steuerungsaktion der Steuerfunktion aus dem ersten Transaktionsdatensatz;
- Ausführen der Steuerfunktion durch ein Ausführen der ersten Steuerungsaktion, wobei das Ausführen insbesondere durch ein Automatisierungssystem durchgeführt wird.

Das Verfahren ist dahingehend vorteilhaft, da es insbesondere blockketten-basierte Überprüfung von Transaktionen, beispielsweise die Steuerungsaktion bzw. Steuerfunktion, ermöglicht. Somit kann beispielsweise eine gesicherte Cloudbasierte oder gesicherte verteilte Steuerungs- oder Überwachungsfunktion eines technischen Systems realisiert werden. Insbesondere ist eine verlässliche, manipulationsgeschützte Steuerungsfunktion realisierbar, die vorzugsweise nicht von speziellen Hardware- oder Netzwerkarchitekturen abhängt. Dadurch können insbesondere verteilte Steuerungssysteme ohne zentrale Steuerrechner realisiert werden. Dieses ist beispielsweise auch durch die impliziten kryptographischen Mechanismen einer Blockkette gegenüber absichtlichen Manipulationen geschützt. Dadurch wird insbesondere ein hoher Integritätsschutz der Steuerungsfunktionalität gewährleistet. Insbesondere kann eine manipulationsgeschützte Sicherheits-Schutzfunktion (engl. safety protection function) realisiert werden, bei der insbesondere redundante Berechnungen und Überprüfungen erfolgen.

Bei einer weiteren Ausführungsform des Verfahrens wird durch den ersten Transaktionsdatensatz zusätzlich eine Steuerungsaktions-Transaktion bereitgestellt, wobei die Steuerungsaktions-Transaktion erfolgreich ausgeführt und/oder bestätigt wird, um ein Ausführen der Steuerfunktion zu erlauben.

Bei einer weiteren Ausführungsform des Verfahrens wird durch die Steuerungsaktions-Transaktion eine sicherheitskritische Schutzfunktion für die Steuerfunktion und/oder die erste Steuerungsaktion vorgegeben.

Bei einer weiteren Ausführungsform des Verfahrens wird durch die Steuerungsaktions-Transaktion ein Pfad für den ersten Transaktionsdatensatz der Blockkette vorgegeben.

Bei einer weiteren Ausführungsform des Verfahrens wird durch die Steuerungsaktions-Transaktion eine erste Anzahl vorhergehender Glieder des ersten Gliedes und/oder eine zweite Anzahl von nachfolgenden Gliedern des ersten Gliedes vorgegeben, wobei durch die Steuerungsaktions-Transaktion vorgegeben wird, dass eine Integrität der ersten Anzahl der vorhergehenden Glieder und/oder der zweiten Anzahl der nachfolgenden Glieder bestätigt wird.

Bei einer weiteren Ausführungsform des Verfahrens wird zusätzlich ein erster Sensorwert und/oder weitere Sensorwerte für eine Zustands-Assertion-Transaktion durch den ersten Transaktionsdatensatz bereitgestellt, wobei die Zustands-Assertion-Transaktion bestätigt und/oder erfolgreich ausgeführt wird, um ein Ausführen der Steuerfunktion zu erlauben.

Bei einer weiteren Ausführungsform des Verfahrens wird durch die Steuerungsaktions-Transaktion eine dritte Anzahl von Blockketten-Knoten vorgegeben, welche ihre zugehörige Steuerungsaktions-Transaktion und/oder Zustands-Assertion-Transaktion erfolgreich ausführen und/oder bestätigen.

Bei einer weiteren Ausführungsform des Verfahrens wird ein Steuersignal bereitgestellt, wenn
- die Integrität des ersten Gliedes nicht bestätigt wird; und/oder
- die Steuerungsaktions-Transaktion nicht bestätigt und/oder nicht durchgeführt wird;
- die Zustands-Assertion-Transaktion nicht bestätigt und/oder nicht durchgeführt wird.

Das Verfahren ist beispielsweise dahingehend vorteilhaft, um mittels des Steuersignals eine Fehlermeldung an einen Administrator zu schicken. Mittels des Steuersignals kann beispielsweise auch ein spezifisches technisches System (z. B. ein Automatisierungssystem) in einen sicheren Zustand versetzt werden, um insbesondere weitere Manipulationen zu verhindern.

Gemäß einem weiteren Aspekt betrifft die Erfindung eine Erstellungsvorrichtung zum rechnergestützten Erstellen einer Steuerfunktion aufweisend:
- ein erstes Bereitstellungsmodul zum Bereitstellen einer ersten Steuerungsaktion der Steuerfunktion;
- ein erstes Speichermodul zum Speichern der ersten Steuerungsaktion in einem ersten Transaktionsdatensatz;
- ein erstes Erstellungsmodul zum Erstellen der ersten Steuerfunktion durch ein Erzeugen eines ersten Gliedes einer Blockkette, wobei
   - das erste Glied den ersten Transaktionsdatensatz umfasst,
- eine Integrität des ersten Gliedes und/oder vorhergehender Glieder des ersten Gliedes der Blockkette mittels einer ersten Prüfsumme geschützt wird.

Bei einer weiteren Ausführungsform der Erstellungsvorrichtung umfasst die Erstellungsvorrichtung zumindest ein weiteres Modul oder mehrere weitere Module zur Durchführung des erfindungsgemäßen Verfahrens (oder einer seiner Ausführungsformen) zum rechnergestützten Erstellen der Steuerfunktion.

Gemäß einem weiteren Aspekt betrifft die Erfindung ein Steuergerät zum rechnergestützten Erstellen einer Steuerfunktion aufweisend:
- ein erstes Empfangsmodul zum Empfangen eines ersten Gliedes einer Blockkette, wobei das erste Glied einen ersten Transaktionsdatensatz und eine erste Prüfsumme umfasst;
- ein erstes Prüfmodul zum Prüfen einer Integrität des ersten Gliedes und/oder vorhergehender Glieder des ersten Gliedes der Blockkette mittels der ersten Prüfsumme;
- ein erstes Lademodul zum Laden einer ersten Steuerungsaktion der Steuerfunktion aus dem ersten Transaktionsdatensatz, wenn die Integrität erfolgreich festgestellt wird;
- ein erstes Ausführungsmodul, insbesondere ein Prozessor, zum Ausführen der Steuerfunktion durch ein Ausführen der ersten Steuerungsaktion, wenn die Integrität erfolgreich festgestellt wird.

Bei einer weiteren Ausführungsform des Steuergerätes umfasst das Steuergerät zumindest ein weiteres Modul oder mehrere weitere Module zur Durchführung des erfindungsgemäßen Verfahrens (oder einer seiner Ausführungsformen) zum rechnergestützten Ausführen der Steuerfunktion.

Des Weiteren wird ein Computerprogrammprodukt mit Programmbefehlen zur Durchführung der genannten erfindungsgemäßen Verfahren beansprucht, wobei mittels des Computerprogrammprodukts jeweils eines der erfindungsgemäßen Verfahren, alle erfindungsgemäßen Verfahren oder eine Kombination der erfindungsgemäßen Verfahren durchführbar ist.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass die genannte erfindungsgemäße Erstellungsvorrichtung und/oder das Steuergerät erstellt werden.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass diese erfindungsgemäße Erstellungsvorrichtung und/oder das Steuergerät erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel der Erfindung als ein Ablaufdiagramm des erfindungsgemäßen Verfahrens zum rechnergestützten Erstellen einer Steuerfunktion;
- Fig. 2: ein zweites Ausführungsbeispiel der Erfindung als ein Ablaufdiagramm des erfindungsgemäßen Verfahrens zum rechnergestützten Ausführen einer Steuerfunktion;
- Fig. 3: ein drittes Ausführungsbeispiel der Erfindung als Erstellungsvorrichtung;
- Fig. 4: ein viertes Ausführungsbeispiel der Erfindung als Steuergerät;
- Fig. 5: ein fünftes Ausführungsbeispiel der Erfindung als System;
- Fig. 6: ein sechstes Ausführungsbeispiel der Erfindung als Blockkette;
- Fig. 7: ein siebtes Ausführungsbeispiel der Erfindung mit einer Zustands-Assertion-Transaktion;
- Fig. 8: ein achtes Ausführungsbeispiel der Erfindung als Steuerungsaktions-Transaktion;
- Fig. 9: ein neuntes Ausführungsbeispiel der Erfindung als Kombination einer Zustands-Assertion-Transaktion und Steuerungsaktions-Transaktion.

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware(komponenten) oder ausschließlich per Software(komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne dass dies expliziert in dem jeweiligen Ausführungsbeispiel genannt sein muss.

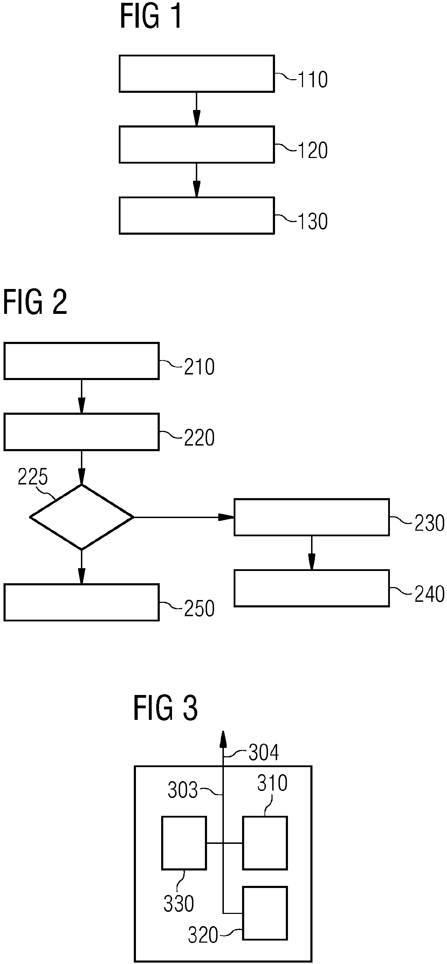

Die Fig. 1 zeigt ein erstes Ausführungsbeispiel der Erfindung als ein Ablaufdiagramm des erfindungsgemäßen Verfahrens zum rechnergestützten Erstellen einer Steuerfunktion.

Das Verfahren ist vorzugsweise rechnergestützt realisiert.

Im Einzelnen wird in diesem Ausführungsbeispiel ein Verfahren zum rechnergestützten Erstellen einer Steuerfunktion realisiert. Das Verfahren kann beispielsweise zum Erstellen einer Steuerfunktion für ein spezifisches technisches System, wie beispielsweise ein Automatisierungssystem, genutzt werden.

Das Verfahren umfasst einen ersten Verfahrensschritt 110 zum Bereitstellen einer ersten Steuerungsaktion der Steuerfunktion. Die Steuerfunktion kann beispielsweise zusätzlich zur ersten Steuerungsaktion weitere Steuerungsaktionen umfassen. Eine Steuerungsaktion kann beispielsweise eine Bewegung eines Aktors eines Roboters eines Automatisierungssystems steuern. Eine Steuerungsaktion weist einen Aktor beispielsweise an, diesen um einen vorgegebenen Winkel um eine vorgegebene Achse zu rotieren oder eine Bewegung mit einer vorgegebenen Distanz entlang einer vorgegebenen Richtung durchzuführen.

Das Verfahren umfasst einen zweiten Verfahrensschritt 120 zum Speichern der ersten Steuerungsaktion in einem ersten Transaktionsdatensatz. Hierdurch kann insbesondere die Steuerfunktion und/oder die erste Steuerungsaktion in den ersten Transaktionsdatensatz abgelegt werden.

Das Verfahren umfasst einen dritten Verfahrensschritt 130 zum Erstellen der ersten Steuerfunktion durch ein Erzeugen eines ersten Gliedes einer Blockkette, wobei das erste Glied den ersten Transaktionsdatensatz (insbesondere inklusive der Steuerfunktion und/oder der ersten Steuerungsaktion) umfasst und eine Integrität des ersten Gliedes (inklusive des ersten Transaktionsdatensatzes) und/oder vorhergehender Glieder des ersten Gliedes der Blockkette mittels einer ersten Prüfsumme geschützt wird. Die erste Prüfsumme kann beispielsweise an das erste Glied angehängt werden und/oder als Prüfsumme des vorhergehenden Blocks in einem dem ersten Glied nachfolgenden Glied eingefügt werden.

Das erste Glied wird damit beispielsweise in die Blockkette eingefügt. Alternativ oder Zusätzlich wird eine zweite Prüfsumme über den ersten Transaktionsdatensatz (z. B. den Transaktionen) des ersten Gliedes und/oder dem ersten Glied direkt vorhergehenden Gliedes und/oder dem ersten Glied vorhergehenden Glieder (z. B. alle oder ausgewählte Glieder) gebildet. Alternativ oder zusätzlich wird eine dritte Prüfsumme über jede Transaktion bzw. jede Transaktion des ersten Transaktionsdatensatzes gebildet. Die zweiten Prüfsummen und/oder die dritten Prüfsummen können beispielsweise Prüfsummen und/oder Blätter eines Hash-Baumes, beispielsweise eines Merkle-Baumes, sein. Aus diesen Prüfsummen und/oder Blättern des Hash-Baumes wird, wie für den Merkle-Baum bekannt, eine Wurzel-Prüfsumme berechnet, wobei die Wurzel-Prüfsumme als erste Prüfsumme dienen kann.

Auf diese Weise können wie z. B. aus Bitcoin bekannt, insbesondere anstelle des ersten Transaktionsdatensatzes/der Transaktionen eines entsprechenden Gliedes nur die jeweiligen Prüfsummen (z. B. die erste Prüfsumme und/oder die zweiten Prüfsummen und/oder dritten Prüfsummen) in den Gliedern der Blockkette abgelegt werden. Hierdurch wird insbesondere eine Speicherersparnis erreicht.

Die Transkationen selbst und/oder der erste Transaktionsdatensatz können dabei jeweils zusätzlich mittels einer vierten Prüfsumme geschützt sein. Diese vierte Prüfsumme kann beispielsweise als digitale Signatur realisiert sein, wobei ein Ersteller der Transaktion insbesondere über einem vorzugsweise ausschließlich ihm bekannten privaten Schlüssel zum erstellen der digitalen Signatur verfügt und einen passenden öffentlichen Schlüssel zum Prüfen der digitalen Signatur bereitstellt. Das Bereitstellen des öffentlichen Schlüssels kann beispielsweise in der gleichen Transaktion erfolgen, die durch den Ersteller signiert wurde oder der öffentliche Schlüssel wird auf andere Weise zugänglich gemacht, um die digitale Signatur bzw. die durch die digitale Signatur geschützte Transaktion auf ihre Authentizität zu prüfen. Dies kann beispielsweise durch eine separate Transaktion/ersten Transaktionsdatensatz eines neuen Gliedes der Blockkette erfolgen, die den öffentlichen Schlüssel umfasst.

Die Fig. 2 zeigt ein zweites Ausführungsbeispiel der Erfindung als ein Ablaufdiagramm des erfindungsgemäßen Verfahrens zum rechnergestützten Ausführen einer Steuerfunktion.

Das Verfahren ist vorzugsweise rechnergestützt realisiert.

Im Einzelnen wird in diesem Ausführungsbeispiel ein Verfahren zum rechnergestützten Ausführen einer Steuerfunktion realisiert. Das Verfahren kann beispielsweise zum Ausführen der Steuerfunktion für ein spezifisches technisches System, wie beispielsweise ein Automatisierungssystem, genutzt werden.

Das Verfahren umfasst einen ersten Verfahrensschritt 210 zum Bereitstellen eines ersten Gliedes einer Blockkette, wobei das erste Glied einen ersten Transaktionsdatensatz und eine erste Prüfsumme umfasst. Das Bereitstellen kann beispielsweise dadurch erfolgen, dass das erste Glied der Blockkette über eine Netzwerkverbindung an das Automatisierungssystem übertragen wird und durch ein Steuergerät verarbeitet wird.

Das Verfahren umfasst einen zweiten Verfahrensschritt 220 zum Prüfen einer Integrität des ersten Gliedes und/oder vorhergehender Glieder des ersten Gliedes der Blockkette mittels der ersten Prüfsumme. Hierzu kann beispielsweise das Steuergerät eine fünfte Prüfsumme über den ersten Transaktionsdatensatz des ersten Gliedes bilden. Stimmen die erste Prüfsumme und die fünfte Prüfsumme überein, so kann eine Integrität des ersten Transaktionsdatensatzes bestätigt werden. Dies kann auf gleiche Weise auch für die vorhergehenden Glieder durchgeführt werden, um die Integrität des ersten Transaktionsdatensatzes zu überprüfen.

Wenn die die Integrität für den ersten Transaktionsdatensatz in einem Zwischenschritt 225 des Verfahrens erfolgreich festgestellt wird, werden zusätzlich folgende Verfahrensschritte ausgeführt:
Das Verfahren umfasst einen dritten Verfahrensschritt 230 zum Laden einer ersten Steuerungsaktion der Steuerfunktion aus dem ersten Transaktionsdatensatz, wenn die Integrität erfolgreich festgestellt wurde. Das Steuergerät liest hierzu beispielsweise den ersten Transaktionsdatensatz aus und lädt die erste Steuerungsaktion in seinen Arbeitsspeicher.

Das Verfahren umfasst einen vierten Verfahrensschritt 240 (wenn die Integrität erfolgreich festgestellt wurde) zum Ausführen der Steuerfunktion durch ein Ausführen der ersten Steuerungsaktion, wobei das Ausführen insbesondere durch ein Automatisierungssystem durchgeführt wird. Das Steuergerät steuert beispielsweise hierzu einen Aktor des Automatisierungssystems entsprechend der ersten Steuerungsaktion an.

Wird die Integrität für den ersten Transaktionsdatensatz nicht erfolgreich festgestellt im Zwischenschritt 225, so kann beispielsweise in einem fünften Verfahrensschritt 250 ein Steuersignal bereitgestellt werden, um beispielsweise das Steuergerät in einen sicheren Zustand zu bringen.

Insbesondere kann eine beliebige Information als eine Transaktion/Transaktionsdatenstruktur (z. B. erster Transaktionsdatensatz) codiert werden. Eine solche Transaktion kann insbesondere in einer Blockkette (engl. Blockchain) hinterlegt werden. Die beispielsweise durch die Transaktion hinterlegte Information kann nicht nachträglich manipuliert werden, und sie kann vorzugsweise durch Dritte (z. B. Knoten) ausgewertet und überprüft werden. Dabei wird insbesondere keine zentrale Infrastruktur benötigt. Eine solche Blockkette stellt somit vorzugsweise eine dezentrale, manipulationsgeschützte Datenbank dar.

Mit anderen Worten wird in Fig. 1 und Fig. 2 ein erfindungsgemäßes Verfahren zum Erstellen und Ausführen einer Steuerungsfunktion realisiert. Die Steuerfunktion kann dabei insbesondere für ein spezifisches technisches System, z. B. ein Automatisierungssystem, realisiert werden und insbesondere durch eine Blockkette kryptographisch geschützt sein. Insbesondere sind somit die erfindungsgemäßen Verfahren für ein spezifisches technisches System, z. B. ein Automatisierungssystem, geeignet.

Dabei wird insbesondere eine Steuerungsaktion entsprechend den aktuell in der Blockkette bestätigten Glieder und der enthaltenen Transaktionen durchgeführt. Dies hat insbesondere den Vorteil, dass der Schutz einer Blockkette verwendet wird, um die Verlässlichkeit einer sicherheitskritischen kritischen Steuerungsfunktion zu realisieren. Insbesondere kann eine sicherheitskritische Schutzfunktion durch einen Smart Contract einer Blockketten-Transaktion definiert sein. Eine solche Transaktion kann insbesondere auch als Steuerungsaktions-Transaktion bezeichnet werden, da diese eine Aktion, beispielsweise eines Aktors, ansteuert.

In einer Variante kann die Steuerungsaktions-Transaktion erst durchgeführt werden, wenn die Transaktion in einem bestätigten Pfad liegt (d.h. wenn nicht noch ein Seitenpfad der Blockkette existiert).

In einer weiteren Variante wird die durch die Steuerungsaktions-Transaktion definierte Aktion erst ausgeführt, wenn eine vorgebbare Anzahl von bestätigten Gliedern der Blockkette nach dem Glied, der diese Steuerungsaktions-Transaktion umfasst, vorliegt.

In einer weiteren Variante gilt eine Steuerungsaktions-Transaktion erst dann als gültig, wenn diese mehrfach bestätigt ist. Hierbei muss vorzugsweise eine Transaktion durch unterschiedliche Blockketten-Knoten überprüft worden sein, bevor sie als gültig akzeptiert und von einem Aktor ausgeführt wird. Mit anderen Worten muss ein Glied insbesondere durch mehrere Knoten bestätigt sein, (z.B. mit unterschiedlichen Puzzle-Lösungen bzw. Proof-of-Work-Nachweisen), um als gültig anerkannt zu werden.

Ein Steuergerät führt entsprechend der Steuerungsaktions-Transaktion des aktuellen bestätigten Gliedes der Blockkette eine Steuerfunktion aus.

In einer weiteren Variante überwacht der Knoten, dass tatsächlich ein aktuelles bestätigtes Glied in der Blockkette vorliegt. Andernfalls wird insbesondere ein Fail-Safe-Mode aktiviert (z. B. durch das Steuersignal). D.h. es wird insbesondere überwacht, ob das Blockketten-System noch aktiv ist (liveliness monitoring).

In einer weiteren Variante kann ein Zustand eines physikalischen Systems, beispielsweise ein spezifisches technisches System z. B. ein Automatisierungssystem, durch Sensoren bzw. Feldgeräte mit verbundenen Sensoren bestätigt werden. Die durch die Sensoren erfassten Sensorwerte werden in einer Zustands-Assertion-Transaktion in die Blockkette vorzugsweise über eine vertrauenswürdige Quelle und/oder Knoten eingefügt. Dabei ist insbesondere weiterhin möglich, dass aus Rohdaten von physikalischen, tatsächlichen Sensoren abgeleitete, überprüfte Daten ermittelt werden (z. B. mittels eines Smart Contracts). So kann beispielsweise ein Zustandswert ermittelt werden, der abhängig von den Messwerten von mehreren, redundanten Sensoren ermittelt wird, die jeweils eine Zustands-Assertion-Transaktion in die Blockkette einstellen. Konkret kann dies beispielsweise dadurch realisiert werden, dass ein Glied mit einem Transaktionsdatensatz bzw. einer Zustands-Assertion-Transaktion in die Blockkette eingefügt wird. Eine Überprüfung kann dann beispielsweise mittels eines Smart Contracts erfolgen, der ebenfalls in die Blockkette bzw. als eine Transaktion in ein Glied der Blockkette eingefügt wurde. Dies kann beispielsweise dadurch erfolgen, dass ein abgeleiteter, geprüfter Wert gebildet wird (z.B. Mehrheitsentscheid von zwei aus drei). Es kann also insbesondere innerhalb der Blockkette eine manipulationsgeschützte Sensordatenverarbeitung (Data Fusion) erfolgen.

Insbesondere lassen sich damit folgende Steuerungsfunktionen realisieren.

Beispielsweise können mit dem erfindungsgemäßen Verfahren bei Stellwerken und/oder Zugsicherungssystemen folgende Anwendungsszenarien realisiert werden: Transaktionen zeigen insbesondere den aktuellen Zustand des Bahnautomatisierungssystems an (z.B. Weichenstellung, Fahrsignal, Achszähler, Gleisfreimeldung, Schrankenmeldung). Es wird insbesondere durch Blockketten oder den in den Transkationen/Transaktionsdatensätzen hinterlegten Smart Contracts sichergestellt, dass nur zulässige Transaktionen durch die Blockkette bestätigt werden. Ein Zustandswechsel, z.B. ein Ändern der Weichenstellung oder des Signalbegriffs eines Fahrsignals, werden nur dann als Steuerungsaktions-Transaktion durch die Blockkette bestätigt, wenn der Smart Contract erfüllt ist. Dabei kann insbesondere auch abgeprüft werden, dass die Transaktion durch eine Mehrzahl von Knoten, z. B. Verifikationsknoten, des Zugsicherungssystem als zulässig bestätigt wird.

In einer weiteren Variante ist das Stellwerk selbst als Blockkette realisiert.

In einer weiteren Variante wird lediglich der Betrieb des Stellwerks überwacht. Dazu kann z. B. die Steuerungskommunikation über ein Einweg-Gateway aus dem Steuerungsnetzwerk rückwirkungsfrei ausgekoppelt werden. Anstelle beispielsweise eines herkömmlichen Blackbox-Rekorders bzw. Juridical-Recorders, der die Daten nur aufzeichnet, damit sie bei einem Unfallereignis zur Verfügung stehen, können sie in der Blockkette gleich auf Zulässigkeit überprüft werden. Dadurch kann ein unabhängiges Überwachungssystem für ein Stellwerk/Zugsicherungssystems realisiert werden.

Beispielsweise können mit dem erfindungsgemäßen Verfahren auch eine Schutzschaltung eines Automatisierungssystems realisiert werden: Ähnlich wie oben beschrieben (Stellwerken und/oder Zugsicherungssystemen) kann bei einer Schutzüberwachung, z. B. eines Roboters mittels Lichtvorhang, der Roboter in einen Fail-Safe-Modus wechseln, wenn nicht aktuell durch eine Steuerungsaktions-Transaktion bestätigt wird, dass ein betriebssicherer Zustand gegeben ist.

Beispielsweise können mit dem erfindungsgemäßen Verfahren Diagnosefunktionen, z.B. Fehlermeldungen, als Transaktionen realisiert werden. Auch können insbesondere erforderliche Wartungsarbeiten (predictive maintennace) abhängig von Transaktionen detektiert werden, und es kann ggf. automatisch ein Wartungs-Ticket erzeugt werden.

In einer weiteren Variante werden für die Steuerfunktion/erste Steuerungsaktion ausgehend von Projektierungsdaten (Komponenten, Automatisierungslogik) entsprechende Smart Contracts für eine Blockkette generiert, die die Steuerungslogik realisieren.

Die Fig. 3 zeigt ein drittes Ausführungsbeispiel der Erfindung als eine Erstellungsvorrichtung zum rechnergestützten Erstellen einer Steuerfunktion für ein Automatisierungssystem.

Die Vorrichtung umfasst ein erstes Bereitstellungsmodul 310, ein erstes Speichermodul 320, ein erstes Erstellungsmodul 330 und eine optionale erste Kommunikationsschnittstelle 304, die über einen ersten Bus 303 kommunikativ miteinander verbunden sind.

Die Vorrichtung kann beispielsweise zusätzlich noch eine weitere oder mehrere weitere Komponente/n umfassen, wie beispielsweise einen Prozessor, eine Speichereinheit, ein Eingabegerät, insbesondere eine Computertastatur oder eine Computermaus, und ein Anzeigegerät (z. B. einen Monitor). Der Prozessor kann beispielsweise mehrere weitere Prozessoren umfassen, wobei beispielsweise die weiteren Prozessoren jeweils eines oder mehrere der Module realisieren. Alternativ realisiert der Prozessor insbesondere alle Module des Ausführungsbeispiels. Die weitere/n Komponente/n können beispielsweise ebenfalls über den ersten Bus 303 miteinander kommunikativ verbunden sein.

Bei dem Prozessor kann es sich beispielsweise um einen ASIC handeln, der anwendungsspezifisch für die Funktionen eines jeweiligen Moduls oder aller Module des Ausführungsbeispiels (und/oder weiterer Ausführungsbeispiele) realisiert wurde, wobei die Programmkomponente bzw. die Programmbefehle insbesondere als integrierte Schaltkreise realisiert sind. Bei dem Prozessor kann es sich beispielsweise auch um einen FPGA handeln, der insbesondere mittels der Programmbefehle derart konfiguriert wird, dass der FPGA die Funktionen eines jeweiligen Moduls oder aller Module des Ausführungsbeispiels (und/oder weiterer Ausführungsbeispiele) realisiert.

Das erste Bereitstellungsmodul 310 ist zum Bereitstellen einer ersten Steuerungsaktion der Steuerfunktion eingerichtet.

Das erste Bereitstellungsmodul 310 kann beispielsweise mittels des Prozessors, der Speichereinheit und einer ersten Programmkomponente implementiert oder realisiert werden, wobei beispielsweise durch ein Ausführen von Programmbefehlen der ersten Programmkomponente der Prozessor derart konfiguriert wird oder durch die Programmbefehle der Prozessor derart konfiguriert ist, dass die ersten Steuerungsaktion der Steuerfunktion bereitgestellt wird.

Das erste Speichermodul 320 ist zum Speichern der ersten Steuerungsaktion in einem ersten Transaktionsdatensatz eingerichtet.

Das erste Speichermodul 320 kann beispielsweise mittels des Prozessors, der Speichereinheit und einer zweiten Programmkomponente implementiert oder realisiert werden, wobei beispielsweise durch ein Ausführen von Programmbefehlen der zweiten Programmkomponente der Prozessor derart konfiguriert wird oder durch die Programmbefehle der Prozessor derart konfiguriert ist, dass die erste Steuerungsaktion gespeichert wird.

Das erste Erstellungsmodul 330 ist zum Erstellen der ersten Steuerfunktion durch ein Erzeugen eines ersten Gliedes einer Blockkette, wobei das erste Glied den ersten Transaktionsdatensatz umfasst und eine Integrität des ersten Gliedes und/oder vorhergehender Glieder des ersten Gliedes der Blockkette mittels einer ersten Prüfsumme geschützt wird.

Das erste Erstellungsmodul 330 kann beispielsweise mittels des Prozessors, der Speichereinheit und einer dritten Programmkomponente implementiert oder realisiert werden, wobei beispielsweise durch ein Ausführen von Programmbefehlen der dritten Programmkomponente der Prozessor derart konfiguriert wird oder durch die Programmbefehle der Prozessor derart konfiguriert ist, dass die Steuerfunktion erstellt wird.

Das Ausführen der Programmbefehle der jeweiligen Module kann hierbei beispielsweise mittels des Prozessors selbst und/oder mittels einer Initialisierungskomponente, beispielsweise ein Lader (engl. loader) oder einer Konfigurationskomponente, erfolgen.

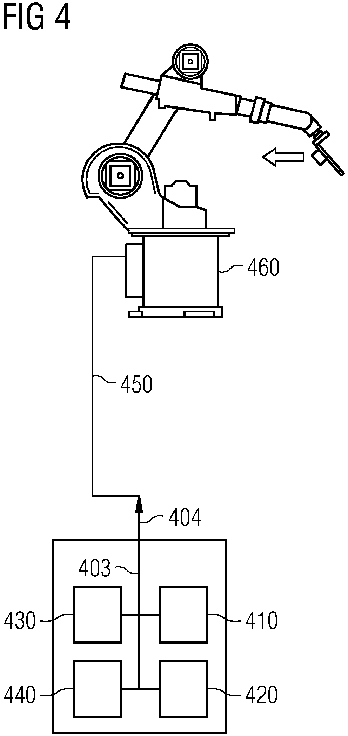

Die Fig. 4 zeigt ein drittes Ausführungsbeispiel der Erfindung als ein Steuergerät zum rechnergestützten Ausführen einer Steuerfunktion für ein Automatisierungssystem.

Die Vorrichtung umfasst ein erstes Empfangsmodul 410, ein erstes Prüfmodul 420, ein erstes Lademodul 430, ein erstes Ausführungsmodul 440 und eine optionale zweite Kommunikationsschnittstelle 404, die über einen zweiten Bus 403 kommunikativ miteinander verbunden sind. Über die zweite Kommunikationsschnittstelle ist über einen dritten Bus 450 ein Industrieroboter 460 mit dem Steuergerät verbunden.

Die Vorrichtung kann beispielsweise zusätzlich noch eine weitere oder mehrere weitere Komponente/n umfassen, wie beispielsweise einen Prozessor, eine Speichereinheit, ein Eingabegerät, insbesondere eine Computertastatur oder eine Computermaus, und ein Anzeigegerät (z. B. einen Monitor). Der Prozessor kann beispielsweise mehrere weitere Prozessoren umfassen, wobei beispielsweise die weiteren Prozessoren jeweils eines oder mehrere der Module realisieren. Alternativ realisiert der Prozessor insbesondere alle Module des Ausführungsbeispiels. Die weitere/n Komponente/n können beispielsweise ebenfalls über den ersten Bus 403 miteinander kommunikativ verbunden sein.

Bei dem Prozessor kann es sich beispielsweise um einen ASIC handeln, der anwendungsspezifisch für die Funktionen eines jeweiligen Moduls oder aller Module des Ausführungsbeispiels (und/oder weiterer Ausführungsbeispiele) realisiert wurde, wobei die Programmkomponente bzw. die Programmbefehle insbesondere als integrierte Schaltkreise realisiert sind. Bei dem Prozessor kann es sich beispielsweise auch um einen FPGA handeln, der insbesondere mittels der Programmbefehle derart konfiguriert wird, dass der FPGA die Funktionen eines jeweiligen Moduls oder aller Module des Ausführungsbeispiels (und/oder weiterer Ausführungsbeispiele) realisiert.

Das erste Empfangsmodul 410 ist zum Empfangen eines ersten Gliedes einer Blockkette eingerichtet, wobei das erste Glied einen ersten Transaktionsdatensatz und eine erste Prüfsumme umfasst.

Das erste Empfangsmodul 410 kann beispielsweise mittels des Prozessors, der Speichereinheit, der zweiten Kommunikationsschnittstelle 404 und einer ersten Programmkomponente implementiert oder realisiert werden, wobei beispielsweise durch ein Ausführen von Programmbefehlen der ersten Programmkomponente der Prozessor derart konfiguriert wird oder durch die Programmbefehle der Prozessor derart konfiguriert ist, dass das erste Glied von dem Steuergerät empfangen werden kann. Das erste Glied kann beispielsweise von einem Erstellungsgerät, so wie es beispielsweise in Fig. 3 gezeigt ist, an das Steuergerät übermittelt worden sein.

Das erste Prüfmodul 420 ist zum Prüfen einer Integrität des ersten Gliedes und/oder vorhergehender Glieder des ersten Gliedes der Blockkette mittels der ersten Prüfsumme eingerichtet.

Das erste Prüfmodul 420 kann beispielsweise mittels des Prozessors, der Speichereinheit und einer zweiten Programmkomponente implementiert oder realisiert werden, wobei beispielsweise durch ein Ausführen von Programmbefehlen der zweiten Programmkomponente der Prozessor derart konfiguriert wird oder durch die Programmbefehle der Prozessor derart konfiguriert ist, dass die Integrität geprüft wird.

Das erste Lademodul 430 ist zum Laden einer ersten Steuerungsaktion der Steuerfunktion aus dem ersten Transaktionsdatensatz eingerichtet, wenn die Integrität durch das erste Prüfmodul 420 erfolgreich festgestellt wurde.

Das erste Lademodul 430 kann beispielsweise mittels des Prozessors, der Speichereinheit und einer dritten Programmkomponente implementiert oder realisiert werden, wobei beispielsweise durch ein Ausführen von Programmbefehlen der dritten Programmkomponente der Prozessor derart konfiguriert wird oder durch die Programmbefehle der Prozessor derart konfiguriert ist, dass die erste Steueraktion geladen wird, wenn die Integrität durch das erste Prüfmodul 420 erfolgreich festgestellt wurde.

Das erste Ausführungsmodul 440 ist zum Ausführen der Steuerfunktion durch ein Ausführen der ersten Steuerungsaktion eingerichtet, wenn die Integrität durch das erste Prüfmodul 420 erfolgreich festgestellt wurde.

Das erste Ausführungsmodul 440 kann beispielsweise mittels des Prozessors, der Speichereinheit und einer vierten Programmkomponente implementiert oder realisiert werden, wobei beispielsweise durch ein Ausführen von Programmbefehlen der vierten Programmkomponente der Prozessor derart konfiguriert wird oder durch die Programmbefehle der Prozessor derart konfiguriert ist, dass die erste Steueraktion ausgeführt wird, wenn die Integrität durch das erste Prüfmodul 420 erfolgreich festgestellt wurde.

Das Ausführen der Programmbefehle der jeweiligen Module kann hierbei beispielsweise mittels des Prozessors selbst und/oder mittels einer Initialisierungskomponente, beispielsweise ein Lader (engl. loader) oder einer Konfigurationskomponente, erfolgen.

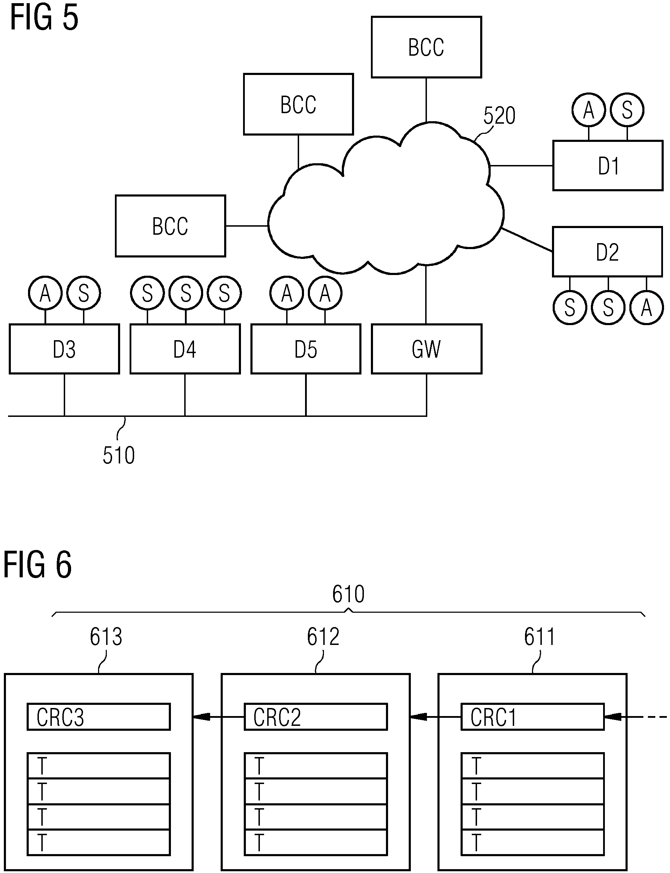

Die Fig. 5 zeigt ein fünftes Ausführungsbeispiel der Erfindung als System.

Im Einzelnen zeigt Fig. 5 ein System mit mehreren Geräten, beispielsweise ein erstes Feldgerät D1, ein zweites Feldgerät D2, ein drittes Feldgerät D3, ein viertes Feldgerät D4 und ein fünftes Feldgerät D5, einem Gateway GW und mehrere Knoten bzw. Blockketten-Knoten BCC, z. B. Bitcoin-Knoten oder Ethereum-Knoten. In einer Variante (nicht dargestellt) können einzelne oder alle der Blockketten-Knoten BCC als fehlersicherer Rechner, z. B. als mehrkanaliger Rechner wie z. B. einem Lockstep-Dual-Architektur (lockstep dual processor architecture), Triple-Modular-Redundant-Architektur (triple modular redundant, TMR) ausgelegt sein. Das dritte Feldgerät D3, das vierte Feldgerät D4 und das fünfte Feldgerät D5 sind über ein Automatisierungsnetzwerk 510 miteinander vernetzt und über das Gateway mit dem Internet 520 verbunden. Das erste Feldgerät D1 und das zweite Feldgerät D2, sowie die Blockketten-Knoten BCC sind ebenfalls mit dem Internet 520 verbunden und stehen miteinander und über das Gateway GW mit den Feldgeräte D3-D5 kommunikativ in Verbindung.

Die Feldgeräte D1-D5 können Sensoren S und/oder Aktoren A aufweisen bzw. mit diesen verbunden sein.

Es kann insbesondere jedem Blockketten-Knoten (z. B. ein Feldgerät), Sensor, Aktor ein öffentlicher Schlüssel (engl. Public Key) oder ein Public Key Hash zugeordnet sein, mit dem er innerhalb des Blockketten-Systems identifiziert werden kann. Hierdurch können die jeweiligen Transaktionen in einem Glied einer Blockkette beispielsweise mittels des öffentlichen Schlüssels digital signiert werden. So kann beispielsweise ein Sensorwert einem Sensor zugeordnet werden, und ein Steuerkommando für einen bestimmten Aktor kann gezielt diesem Aktor zugewiesen werden. Zusätzlich können Blockketten-Knoten, Sensoren, Aktoren jeweils einen geheimen privaten Schlüssel umfassen, um insbesondere Transaktionen/den ersten Transaktionsdatensatz digital zu signieren.

Die Feldgeräte D1-D5 können jeweils ein Steuergerät, so wie es in Fig. 4 erläutert wurde, umfassen. Einer oder mehrere der Blockketten-Knoten BCC umfasst beispielsweise ein Erstellungsgerät, so wie dieses beispielsweise in Fig. 3 erläutert wurde.

Ein Blockketten-Knoten BCC mit einem Erstellungsgerät kann beispielsweise eine Steuerfunktion erstellen, so wie dies in Fig. 1 erläutert wurde. Dieser Steuerbefehl wird beispielsweise an das fünfte Feldgerät D5 als erstes Glied übermittelt. Das Steuergerät des fünften Feldgerätes wertet dann das erste Glied aus und führt die ggf. Steuerfunktion aus, so wie dies in Fig. 2 erläutert wurde.

Die Fig. 6 zeigt ein sechstes Ausführungsbeispiel als Blockkette.

Im Einzelnen zeigt die Fig. 6 die Glieder 610, beispielsweise ein erstes Glied 611, ein zweites Glied 612 und ein drittes Glied 613, einer Blockkette.

Die Glieder 610 umfassen jeweils mehrere Transaktionsdatensätze T. Bei einem, mehreren oder allen Transaktionsdatensätzen kann es sich beispielsweise um einen ersten Transaktionsdatensatz handeln, so wie dieser in Fig. 1 erstellt wird.

Die Glieder 610 umfassen jeweils zusätzlich noch eine erste Prüfsumme CRC1, CRC2, CRC3, die abhängig vom Vorgänger-Glied gebildet ist. Somit umfasst das erste Glied 611 eine erste Prüfsumme von seinem Vorgänger-Glied, das zweite Glied 612 eine erste Prüfsumme vom ersten Glied 611, und das dritte Glied 613 eine erste Prüfsumme vom zweiten Glied 612. Die erste Prüfsumme wird vorzugsweise jeweils über die gesamte Datenstruktur inklusive der Transaktionsdatensätze T gebildet. Dies kann, wie bereits in den vorhergehenden Ausführungsbeispielen erläutert, mittels eines Hash-Baumes realisiert werden. Die Prüfsummen CRC1, CRC2, CRC3 können vorzugsweise unter Verwendung einer kryptographischen Hash-Funktion wie z.B. SHA-256 oder SHA-3 gebildet werden.

Um den Hash-Baum zu bilden, umfassen die Glieder jeweils zu ihren Transaktionen/Transaktionsdatensätzen T eine dritte Prüfsumme (i.A. ebenfalls ein Hash-Wert, der abhängig von den Transaktionen/Transaktionsdatensätzen gebildet wird). Üblicherweise wird ein Hash-Baum, z. B. ein Merkle Tree oder Patricia Tree, verwendet, dessen Wurzel-Hash-Wert/Wurzel-Prüfsumme vorzugsweise als erste Prüfsumme in dem jeweiligen Glied hinterlegt wird oder für ein nachfolgendes Glied bereitgestellt wird.

Ein Glied kann weiterhin einen Zeitstempel, eine digitale Signatur, einen Proof-of-Work-Nachweis aufweisen.

Die Glieder können nun an ein Feldgerät mit einem Steuergerät (z. B. das Steuergerät aus Fig. 4) übertragen werden und das Steuergerät führt die Transaktionen der Glieder aus. Werden die Transaktionen und die Integrität der Glieder als gültig anerkannt, so wird die Steuerfunktion ausgeführt und beispielsweise ein Aktor des Feldgerätes angesteuert.

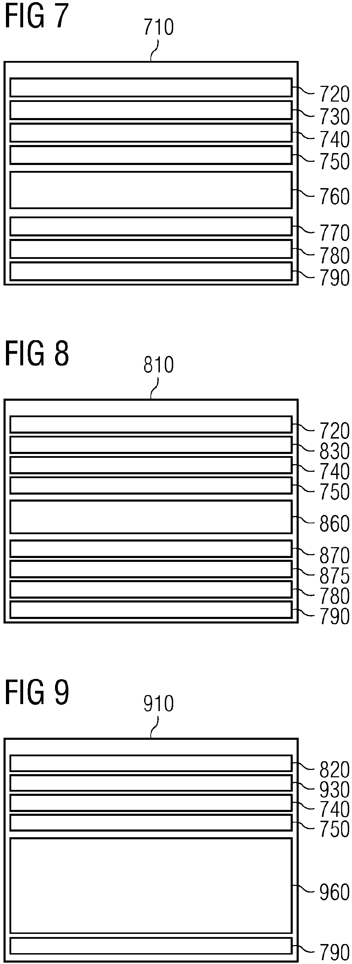

Die Fig. 7 zeigt ein siebtes Ausführungsbeispiel der Erfindung mit einer Zustands-Assertion-Transaktion.

Im Einzelnen zeigt die Fig. 7 einen ersten Transaktionsdatensatz, der eine Zustands-Assertion-Transaktion 710 realisiert.

Die Zustands-Assertion-Transaktion umfasst mehrere Datenfelder, wie beispielsweise einen Betreff/Bezeichner für die Transaktion 720, einen optionalen öffentlichen Geräteschlüssel 730 (z. B. 3A76E21876EFA03787FD629A65E9E990...), den verwendeten Algorithmus 740 des öffentlichen Schlüssels 730 (z. B. ECC), eine Parameterangabe 750 zu dem Algorithmus (z. B. Curve: brainpoolP160r1) und einen Smart Contract 760 der angibt wie ein Sensorwert 770 evaluiert werden soll und welche Bedingungen der Sensorwert 770 erfüllen muss, damit die Transaktion gültig ist bzw. erfolgreich ausgeführt werden kann. Zusätzlich umfasst die Zustands-Assertion-Transaktion 710 einen Zeitstempel 780 und eine digitale Signatur 790 für die Zustands-Assertion-Transaktion 710 bzw. den ersten Transaktionsdatensatz.

Die Fig. 7 zeigt insbesondere ein Beispiel für eine Zustands-Assertion-Transaktion 710, die Sensordaten oder Sensorwerte, gemeinsam mit einer Aktualitätsinformation bestätigt. Die Aktualitätsinformation kann beispielsweise als eine Echtzeitinformation sein (der Zeitstempel 780) oder ein Zählerwert.

Der öffentliche Geräteschlüssel 730 kann beispielsweise dafür verwendet werden, um eine Authentizität des Sensorwertes sicherzustellen. Beispielsweise, dass nur ein bestimmter Sensor diesen Sensorwert bereitgestellt hat.

Die Fig. 8 zeigt ein achtes Ausführungsbeispiel der Erfindung mit einer Steuerungsaktions-Transaktion.

Im Einzelnen zeigt die Fig. 8 einen ersten Transaktionsdatensatz, der eine Steuerungsaktions-Transaktion 810 realisiert.

Die Steuerungsaktions-Transaktion 810 umfasst mehrere Datenfelder, wie beispielsweise einen Betreff/Bezeichner für die Transaktion 720, einen optionalen öffentlichen Schlüssel 830 (z. B. 3A76E21876EFA4711FD629A65E9E990...) zum Identifizieren der Steuerfunktion, den verwendeten Algorithmus 740 des öffentlichen Schlüssels 730 (z. B. ECC), eine Parameterangabe 750 zu dem Algorithmus (z. B. Curve: brainpoolP160r1) und einen Smart Contract 860, der angibt wie eine Steuerungsaktion 870 (z. B. die erste Steuerungsaktion) evaluiert werden soll und welche Sicherheitsbedingungen erfüllt sein müssen, damit die Transaktion gültig ist bzw. erfolgreich ausgeführt werden kann. Zusätzlich umfasst die Steuerungsaktions-Transaktion 810 ein Aktionsziel 875, das insbesondere die Steuerungsaktion 870 ausführen soll, einen Zeitstempel 780 und eine digitale Signatur 790 für die Steuerungsaktions-Transaktion 810 bzw. den ersten Transaktionsdatensatz.

Auf diese Weise kann insbesondere eine sicherheitsgeschützte Steuerfunktion mittels eines Gliedes einer Blockkette realisiert werden.

Die Fig. 9 zeigt ein neuntes Ausführungsbeispiel der Erfindung als Kombination einer Zustands-Assertion-Transaktion und Steuerungsaktions-Transaktion.

Im Einzelnen zeigt die Fig. 9 einen ersten Transaktionsdatensatz, der eine Steuerungsaktions-Transaktion 810 mit einer Zustands-Assertion-Transaktion 710 kombiniert und als Kombinationstransaktion 910 realisiert.

Die Kombinationstransaktion 910 umfasst mehrere Datenfelder, wie beispielsweise einen Betreff/Bezeichner für die Transaktion 720, einen optionalen öffentlichen Schlüssel 830 (z. B. 3A76E21876EFA4711FD629A65E9E990...) zum Identifizieren der Steuerfunktion, den verwendeten Algorithmus 740 des öffentlichen Schlüssels 730 (z. B. ECC), eine Parameterangabe 750 zu dem Algorithmus (z. B. Curve: brainpoolP160r1) und einen Smart Contract 960, der angibt wie eine Steuerungsaktion 870 (z. B. die erste Steuerungsaktion) evaluiert werden soll und welche Sicherheitsbedingungen erfüllt sein müssen, damit die Transaktion gültig ist bzw. erfolgreich ausgeführt werden kann. Zusätzlich umfasst die Kombinationstransaktion eine digitale Signatur 790 für die Steuerungsaktions-Transaktion 810 bzw. den ersten Transaktionsdatensatz.

Die Logik der Steuerungsanwendung, beispielsweise eine Sicherheits-Logik und/oder einen Steuerungsalgorithmus und/oder die Steuerfunktion und/oder Vorgaben, die durch eine Steuerungsaktions-Transaktion gemacht werden können und/oder sicherheitskritische Schutzfunktionen, ist dabei als Smart Contract, beispielsweise als Programmcode, in der Transaktion hinterlegt.

Hierbei kann z. B. ein Blockketten-Knoten, beispielsweise ein Blockketten-Knoten, der ein Erstellungsgerät (wie es in Fig. 3 gezeigt ist) umfasst und insbesondere als Blockketten-Steuerknoten realisiert ist (BCC), Transaktionen abhängig vom aktuellen Zustand des spezifischen technischen System, beispielsweise ein Automatisierungssystem, bestimmen. Die kann gemäß einer bestimmten Zustands-Assertion-Transaktion 710 und optional auch von anderen aktuellen Steuerungsaktions-Transaktionen 810 durchgeführt werden. Die Steuerungslogik und/oder die Prüflogik und/oder die Anforderungen/Vorgaben sind dabei in dem Smart Contract 960 hinterlegt. Alternativ oder zusätzlich sind die Steuerungslogik und/oder die Prüflogik und/oder die Anforderungen/Vorgaben in den Smart Contracts der bestimmten Zustands-Assertion-Transaktion 710 und den optionalen anderen aktuellen Steuerungsaktions-Transaktionen 810 hinterlegt.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.

## Patentansprüche

1. Verfahren zum rechnergestützten Erstellen einer Steuerfunktion mit folgenden Verfahrensschritten:
- Bereitstellen (110) einer ersten Steuerungsaktion der Steuerfunktion;
- Speichern (120) der ersten Steuerungsaktion in einem ersten Transaktionsdatensatz;
- Erstellen (130) der ersten Steuerfunktion durch ein Erzeugen eines ersten Gliedes einer Blockkette, wobei
- das erste Glied den ersten Transaktionsdatensatz umfasst,
- eine Integrität des ersten Gliedes und/oder vorhergehender Glieder des ersten Gliedes der Blockkette mittels einer ersten Prüfsumme geschützt wird.

2. Verfahren nach Anspruch 1, wobei zusätzlich eine Steuerungsaktions-Transaktion in dem ersten Transaktionsdatensatz gespeichert wird.

3. Verfahren nach Anspruch 2, wobei durch die Steuerungsaktions-Transaktion eine sicherheitskritische Schutzfunktion für die Steuerfunktion und/oder die erste Steuerungsaktion vorgegeben wird.

4. Verfahren nach Anspruch 2 oder 3, wobei durch die Steuerungsaktions-Transaktion ein Pfad für den ersten Transaktionsdatensatz der Blockkette vorgegeben wird.

5. Verfahren nach einem der Ansprüche 2 - 4, wobei
- durch die Steuerungsaktions-Transaktion eine erste Anzahl vorhergehender Glieder des ersten Gliedes und/oder eine zweite Anzahl von nachfolgenden Glieder des ersten Gliedes vorgegeben wird, und
- durch die Steuerungsaktions-Transaktion vorgegeben wird, dass eine Integrität der ersten Anzahl der vorhergehenden Glieder und/oder der zweiten Anzahl der nachfolgenden Glieder bestätigt wird.

6. Verfahren nach einem der vorhergehenden Ansprüche, wobei zusätzlich ein erster Sensorwert und/oder weitere Sensorwerte für eine Zustands-Assertion-Transaktion in dem ersten Transaktionsdatensatz gespeichert wird.

7. Verfahren nach einem der vorhergehenden Ansprüche, wobei durch die Steuerungsaktions-Transaktion eine dritte Anzahl von Blockketten-Knoten vorgegeben wird, welche ihre zugehörige Steuerungsaktions-Transaktion und/oder Zustands-Assertion-Transaktion erfolgreich ausführen und/oder bestätigen.

8. Verfahren zum rechnergestützten Ausführen einer Steuerfunktion mit folgenden Verfahrensschritten:
- Bereitstellen (210) eines ersten Gliedes einer Blockkette, wobei das erste Glied einen ersten Transaktionsdatensatz und eine erste Prüfsumme umfasst;
- Prüfen (220) einer Integrität des ersten Gliedes und/oder vorhergehender Glieder des ersten Gliedes der Blockkette mittels der ersten Prüfsumme, wobei wenn die Integrität erfolgreich festgestellt wird, zusätzlich folgende Verfahrensschritte ausgeführt werden:
- Laden (230) einer ersten Steuerungsaktion der Steuerfunktion aus dem ersten Transaktionsdatensatz;
- Ausführen (240) der Steuerfunktion durch ein Ausführen der ersten Steuerungsaktion, wobei das Ausführen insbesondere durch ein Automatisierungssystem durchgeführt wird.

9. Verfahren nach Anspruch 8, wobei
- durch den ersten Transaktionsdatensatz zusätzlich eine Steuerungsaktions-Transaktion bereitgestellt wird,
- die Steuerungsaktions-Transaktion erfolgreich ausgeführt und/oder bestätigt wird, um ein Ausführen der Steuerfunktion zu erlauben.

10. Verfahren nach Anspruch 9, wobei durch die Steuerungsaktions-Transaktion eine sicherheitskritische Schutzfunktion für die Steuerfunktion und/oder die erste Steuerungsaktion vorgegeben wird.

11. Verfahren nach Anspruch 9 oder 10, wobei durch die Steuerungsaktions-Transaktion ein Pfad für den ersten Transaktionsdatensatz der Blockkette vorgegeben wird.

12. Verfahren nach einem der Ansprüche 9 - 11, wobei
- durch die Steuerungsaktions-Transaktion eine erste Anzahl vorhergehender Glieder des ersten Gliedes und/oder eine zweite Anzahl von nachfolgenden Glieder des ersten Gliedes vorgegeben wird, und
- durch die Steuerungsaktions-Transaktion vorgegeben wird, dass eine Integrität der ersten Anzahl der vorhergehenden Glieder und/oder der zweiten Anzahl der nachfolgenden Glieder bestätigt wird.

13. Verfahren nach einem der Ansprüche 9 - 12, wobei
- zusätzlich ein erster Sensorwert und/oder weitere Sensorwerte für eine Zustands-Assertion-Transaktion durch den ersten Transaktionsdatensatz bereitgestellt wird,
- die Zustands-Assertion-Transaktion bestätigt und/oder erfolgreich ausgeführt wird, um ein Ausführen der Steuerfunktion zu erlauben.

14. Verfahren nach einem der Ansprüche 9 - 13, wobei durch die Steuerungsaktions-Transaktion eine dritte Anzahl von Blockketten-Knoten vorgegeben wird, welche ihre zugehörige Steuerungsaktions-Transaktion und/oder Zustands-Assertion-Transaktion erfolgreich ausführen und/oder bestätigen.

15. Verfahren nach einem der vorhergehenden Ansprüche, wobei ein Steuersignal bereitgestellt wird, wenn
- die Integrität des ersten Gliedes nicht bestätigt wird; und/oder
- die Steuerungsaktions-Transaktion nicht bestätigt und/oder nicht durchgeführt wird;
- die Zustands-Assertion-Transaktion nicht bestätigt und/oder nicht durchgeführt wird.

16. Erstellungsvorrichtung zum rechnergestützten Erstellen einer Steuerfunktion aufweisend:
- ein erstes Bereitstellungsmodul (310) zum Bereitstellen einer ersten Steuerungsaktion der Steuerfunktion;
- ein erstes Speichermodul (320) zum Speichern der ersten Steuerungsaktion in einem ersten Transaktionsdatensatz;
- ein erstes Erstellungsmodul (330) zum Erstellen der ersten Steuerfunktion durch ein Erzeugen eines ersten Gliedes einer Blockkette, wobei
- das erste Glied den ersten Transaktionsdatensatz umfasst,
- eine Integrität des ersten Gliedes und/oder vorhergehender Glieder des ersten Gliedes der Blockkette mittels einer ersten Prüfsumme geschützt wird.

17. Steuergerät für ein Automatisierungssystem aufweisend:
- ein erstes Empfangsmodul (410) zum Empfangen eines ersten Gliedes einer Blockkette, wobei das erste Glied einen ersten Transaktionsdatensatz und eine erste Prüfsumme umfasst;
- ein erstes Prüfmodul (420) zum Prüfen einer Integrität des ersten Gliedes und/oder vorhergehender Glieder des ersten Gliedes der Blockkette mittels der ersten Prüfsumme;
- ein erstes Lademodul (430) zum Laden einer ersten Steuerungsaktion der Steuerfunktion aus dem ersten Transaktionsdatensatz, wenn die Integrität erfolgreich festgestellt wird;
- ein erstes Ausführungsmodul (440), insbesondere ein Prozessor, zum Ausführen der Steuerfunktion durch ein Ausführen der ersten Steuerungsaktion wenn die Integrität erfolgreich festgestellt wird.

18. Computerprogrammprodukt mit Programmbefehlen zur Durchführung der Verfahren nach einem der Ansprüche 1 - 7 und/oder nach einem der Ansprüche 8 - 15.

19. Computerprogrammprodukt mit Programmbefehlen für ein Erstellungsgerät, das mittels der Programmbefehle konfiguriert wird, die Erstellungsvorrichtung nach Anspruch 16 und/oder das Steuergerät nach Anspruch 17 zu erstellen.

20. Bereitstellungsvorrichtung für das Computerprogrammprodukt nach Anspruch 18 oder 19, wobei die Bereitstellungsvorrichtung das Computerprogrammprodukt speichert und/oder bereitstellt.
